(19) Europäisches Patentamt / European Patent Office / Office européen des brevets

(11) **EP 2 586 133 B1**

(12) **FASCICULE DE BREVET EUROPEEN**

(45) Date de publication et mention de la délivrance du brevet:
**23.03.2016 Bulletin 2016/12**

(51) Int Cl.:
*H04B 1/62* (2006.01)          *G10L 19/04* (2013.01)
*G10L 19/032* (2013.01)

(21) Numéro de dépôt: **11736415.8**

(22) Date de dépôt: **17.06.2011**

(86) Numéro de dépôt international:
**PCT/FR2011/051392**

(87) Numéro de publication internationale:
**WO 2011/161362 (29.12.2011 Gazette 2011/52)**

(54) **CONTRÔLE D'UNE BOUCLE DE RÉTROACTION DE MISE EN FORME DE BRUIT DANS UN CODEUR DE SIGNAL AUDIONUMÉRIQUE**

STEUERUNG EINER RAUSCHFORMUNGS-FEEDBACKSCHLEIFE IN EINEM DIGITALEN AUDIOSIGNAL-ENCODER

CONTROLLING A NOISE-SHAPING FEEDBACK LOOP IN A DIGITAL AUDIO SIGNAL ENCODER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2010 FR 1055037**

(43) Date de publication de la demande:
**01.05.2013 Bulletin 2013/18**

(73) Titulaire: **Orange**
**75015 Paris (FR)**

(72) Inventeurs:
• **RAGOT, Stéphane**
  **F-22300 Lannion (FR)**
• **KOVESI, Balazs**
  **F-22300 Lannion (FR)**
• **LE GUYADER, Alain**
  **F-22300 Lannion (FR)**

(56) Documents cités:
**WO-A1-2008/151410**

• **HIWASAKI Y ET AL: "G.711.1: A wideband extension to ITU-T G.711", 16TH EUROPEAN SIGNAL PROCESSING CONFERENCE EUSIPCO 2008, LAUSANNE, SWITZERLAND, AUGUST 25-29,2008, EURASIP, CH, 25 août 2008 (2008-08-25), pages 1-5, XP002562145,**

**Description**

La présente invention concerne le domaine du codage des signaux numériques.

Le codage selon l'invention est adapté notamment pour la transmission et/ou le stockage de signaux numériques tels que des signaux audiofréquences (parole, musique ou autres).

La présente invention se rapporte plus particulièrement au contrôle d'une boucle de rétroaction dans un codage de forme d'onde de type codage MICDA (pour "Modulation par Impulsion et Codage Différentiel Adaptatif") dit "ADPCM" (pour "*Adaptive Differential Pulse Code Modulation*") en anglais et notamment au codage de type MICDA à codes imbriqués permettant de délivrer des indices de quantification à train binaire scalable.

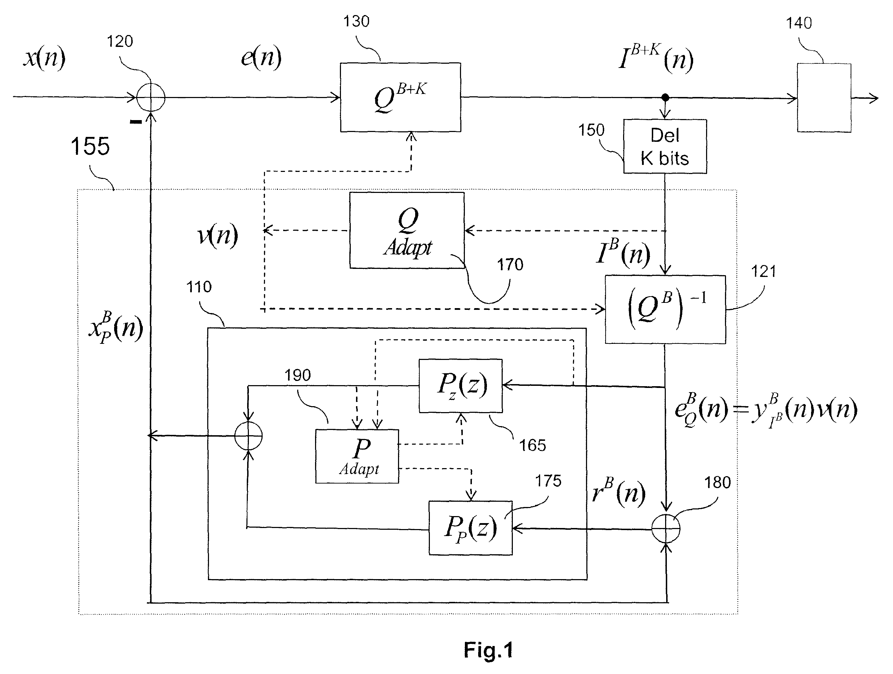

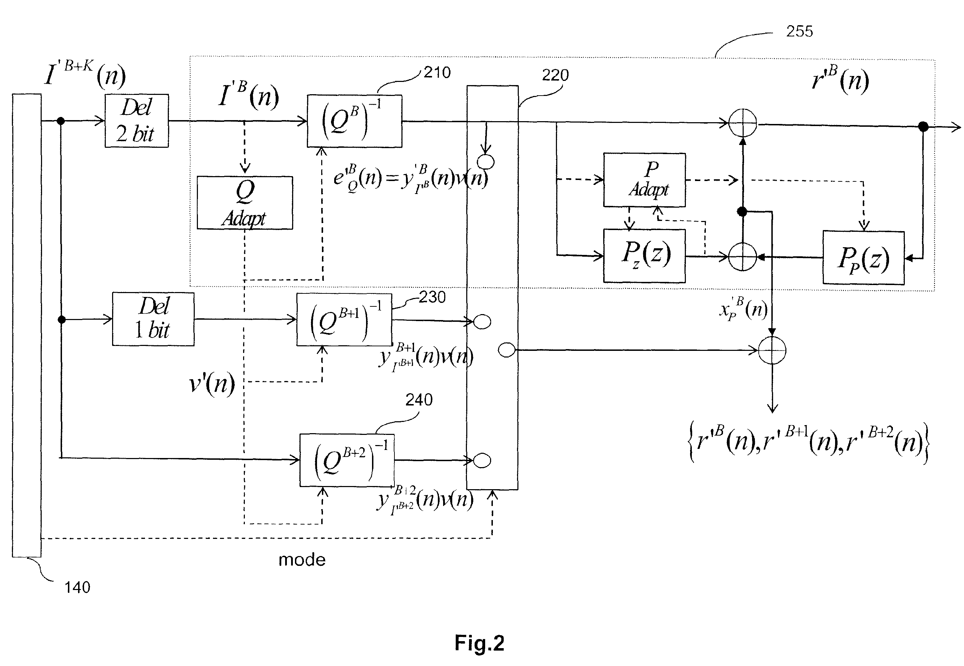

Le principe général du codage/décodage MICDA à codes imbriqués spécifié par les recommandations UIT-T G.722, UIT-T G.726 ou UIT-T G.727 est tel que décrit en référence aux figures 1 et 2.

La **figure 1** représente ainsi un codeur à codes imbriqués de type MICDA (ex : G.722 bande basse, G.727) fonctionnant entre B et B+K bits par échantillon ; à noter que le cas d'un codage MICDA non scalable (ex : G.726, G.722 bande haute) correspond à K=0.

Il comporte:

- un module de prédiction 110 permettant de donner la prédiction du signal $x_P^B(n)$ à partir des échantillons précédents du signal d'erreur quantifié $e_Q^B(n') = y_{I^B}^B(n')v(n')$ $n' = n-1,...,n-N_Z$ , où v(n') est le facteur d'échelle de quantification, et à partir du signal reconstitué $r^B(n')$ $n' = n$ -1, ..., n - $N_P$ où n est l'instant courant.

- un module de soustraction 120 qui retranche du signal d'entrée x(n) sa prédiction $x_P^B(n)$ (n) pour obtenir un signal d'erreur de prédiction noté e(n).

- un module de quantification 130 $Q^{B+K}$ du signal d'erreur qui reçoit en entrée le signal d'erreur e(n) pour donner des indices de quantification $I^{B+K}(n)$ constitués de B+K bits. Le module de quantification $Q^{B+K}$ est à codes imbriqués c'est-à-dire qu'il comporte un quantificateur coeur à B bits et des quantificateurs à B+k k=1,...,K bits qui sont imbriqués sur le quantificateur coeur.

Dans le cas de la norme UIT-T G.722 (codage de la bande basse), les niveaux de décision et les niveaux de reconstruction des quantificateurs $Q^B$, $Q^{B+1}$, $Q^{B+2}$ pour B=4 sont donnés par les tableaux IV et VI de l'article de synthèse décrivant la norme G.722 de X. Maitre. "7 kHz audio coding within 64 kbit/s". IEEE Journal on Selected Areas in Communication, Vol.6-2, February 1988.

L'indice de quantification $I^{B+K}(n)$ de B + K bits en sortie du module de quantification $Q^{B+K}$ est transmis via le canal de transmission 140 au décodeur tel que décrit en référence à la figure 2.

Le codeur comporte également:

- un module 150 de suppression des K bits de poids faible de l'indice $I^{B+K}(n)$ pour donner un indice bas débit $I^B(n)$;
- un module de quantification inverse 121 $(Q^B)^{-1}$ pour donner en sortie un signal d'erreur quantifié $e_Q^B(n) = y_{I^B}^B(n)v(n)$ sur B bits;
- un module d'adaptation 170 $Q_{Adapt}$ des quantificateurs et des quantificateurs inverses pour donner un paramètre de contrôle de niveau v(n) encore appelé facteur d'échelle, pour l'instant suivant;
- un module d'addition 180 de la prédiction $x_P^B(n)$ au signal d'erreur quantifié pour donner le signal reconstruit à bas débit $r^B(n)$;
- un module d'adaptation 190 $P_{Adapt}$ du module de prédiction à partir du signal d'erreur quantifié sur B bits $e_Q^B(n)$ et du signal $e_Q^B(n)$ filtré par 1+$P_z$(z).

On peut remarquer que sur la figure 1 la partie grisée référencée 155 représente le décodeur local à bas débit qui contient les prédicteurs 165 et 175 et le quantificateur inverse 121. Ce décodeur local permet ainsi d'adapter le quantificateur inverse en 170 à partir de l'indice bas débit $I^B(n)$ et d'adapter les prédicteurs 165 et 175 à partir des données bas débit reconstruites.

Cette partie se retrouve à l'identique sur le décodeur MICDA à codes imbriqués tel que décrit en référence à la figure 2.

En l'absence de pertes de trames, le décodeur MICDA à codes imbriqués de la **figure 2** reçoit en entrée les indices $I'^{B+k}$, où $0 \le k \le K$ , issu du canal de transmission 140, version de $I^{B+k}$ éventuellement perturbée par des erreurs binaires. Le décodeur réalise une quantification inverse par le module de quantification inverse 210 $(Q^B)^{-1}$ de débit B

bits par échantillon pour obtenir le signal $e_Q^{'B}(n) = y_{I^{'B}}^{B}(n)v'(n)$. Le symbole " ' " indique une valeur décodée à partir des bits reçus, éventuellement différente de celle utilisée par le codeur du fait d'erreurs de transmission. Le signal de sortie $r^{'B}(n)$ pour B bits sera égal à la somme de la prédiction $x_P^{'B}(n)$ du signal et de la sortie $e_Q^{'B}(n)$ du quantificateur inverse à B bits. Cette partie 255 du décodeur est identique au décodeur local bas débit 155 de la figure 1.

Moyennant l'indicateur de débit *mode* et le sélecteur 220, le décodeur peut améliorer le signal restitué.

En effet si *mode* indique que B+1 bits ont été transmis, la sortie sera égale à la somme de la prédiction $x_P^{'B}(n)$ et de la sortie du quantificateur inverse 230 à B+1 bits $y_{I^{'B+1}}^{'B+1}(n)v'(n)$.

Si *mode* indique que B+2 bits ont été transmis alors la sortie sera égale à la somme de la prédiction $x_P^{'B}(n)$ et de la sortie du quantificateur inverse 240 à B+2 bits $y_{I^{'B+2}}^{'B+2}(n)v'(n)$.

Le codage MICDA à codes imbriqués de la norme UIT-T G.722 (ci-après nommé G.722) réalise un codage des signaux en bande élargie qui sont définis avec une largeur de bande minimale de [50-7000 Hz] et échantillonnés à 16 kHz. Le codage G.722 est un codage MICDA de chacune des deux sous-bandes du signal [0-4000 Hz] et [4000-8000 Hz] obtenues par décomposition du signal par des filtres miroirs en quadrature. La bande basse est codée par un codage MICDA à codes imbriqués sur 6, 5 et 4 bits tandis que la bande haute est codée par un codeur MICDA de 2 bits par échantillon. Le débit total sera de 64, 56 ou 48 bit/s suivant le nombre de bits utilisé pour le décodage de la bande basse.

Ce codage a d'abord été développé pour utilisation dans le RNIS (Réseau Numérique à Intégration de Services). Il a été récemment déployé dans les applications de téléphonie de qualité améliorée sur réseau IP.

Pour un quantificateur à grand nombre de niveaux, le spectre du bruit de quantification sera relativement plat. Cependant, dans les zones fréquentielles où le signal a une faible énergie, le bruit peut avoir un niveau supérieur au signal et n'est donc plus forcément masqué. Il peut alors devenir audible dans ces régions.

Une mise en forme du bruit de codage est donc nécessaire. Dans un codeur comme G.722, une mise en forme du bruit de codage adaptée à un codage à codes imbriqués est de plus souhaitable.

De façon générale, le but de la mise en forme du bruit de codage est d'obtenir un bruit de quantification dont l'enveloppe spectrale suit le seuil de masquage court-terme; ce principe est souvent simplifié de sorte que le spectre du bruit suive approximativement le spectre du signal, assurant un rapport signal à bruit homogène pour que le bruit reste inaudible même dans les zones de plus faible énergie du signal.

Une technique de mise en forme du bruit pour un codage de type MIC (pour "Modulation par Impulsions Codées") à codes imbriqués est décrite dans la recommandation UIT-T G.711.1 «Wideband embedded extension for G.711 pulse code modulation ou « G.711.1: A wideband extension to ITU-T G.711 ». Y. Hiwasaki, S. Sasaki, H. Ohmuro, T. Mori, J. Seong, M. S. Lee, B. Kövesi, S. Ragot, J.-L. Garcia, C. Marro ,L. M., J. Xu, V. Malenovsky, J. Lapierre, R. Lefebvre. EUSIPCO, Lausanne, 2008.

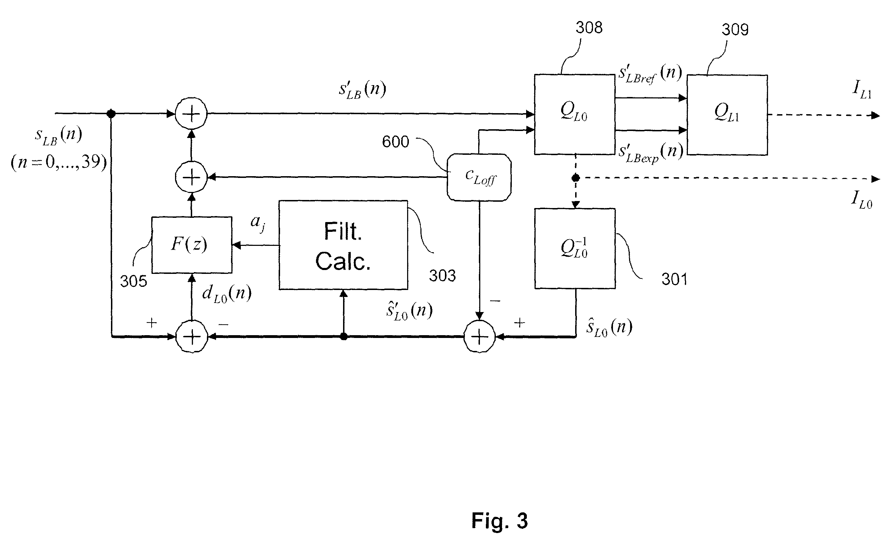

Cette recommandation décrit un codage avec mise en forme du bruit de codage par rétroaction de bruit (ou "noise feedback" en anglais) tel qu'illustré à la figure 3. Un filtre perceptuel F(z) de mise en forme du bruit de codage (bloc 305) est calculé (bloc 303) sur la base des signaux décodés $s'_{L0}(n)$ à débit de coeur à 64 kbit/s (LO pour Layer 0), issus d'un quantificateur coeur inverse (bloc 301). Un décodeur local de débit coeur (bloc 301) permet donc de calculer le filtre F(z) de mise en forme du bruit. Ainsi, au décodeur, il est également possible de calculer ce même filtre de mise en forme du bruit à partir des signaux décodés de débit coeur.

Un quantificateur délivrant des bits de coeur (bloc 308) et un quantificateur délivrant des bits d'amélioration (bloc 309) est utilisé au codeur G.711.1.

Le décodeur G.711.1 recevant le flux binaire coeur (L0) et les bits d'amélioration (L1), calcule le filtre F(z) de mise en forme du bruit de codage de la même façon qu'au codeur à partir du signal décodé de débit coeur (64 kbit/s) et applique ce filtre au signal de sortie du quantificateur inverse des bits d'amélioration, le signal haut débit mis en forme étant obtenu en ajoutant le signal filtré au signal décodé de coeur.

La mise en forme du bruit améliore ainsi la qualité perceptuelle du signal de débit coeur. Elle offre une amélioration limitée de la qualité pour les bits d'amélioration. En effet, la mise en forme du bruit de codage n'est pas effectuée pour le codage des bits d'amélioration, l'entrée du quantificateur étant la même pour la quantification de coeur que pour la quantification améliorée.

Le décodeur doit alors supprimer une composante parasite résultante par un filtrage adapté, lorsque les bits d'amélioration sont décodés en plus des bits coeur.

La mise en forme de bruit par rétroaction de bruit telle que mise en oeuvre dans la recommandation G.711.1 est généralisable à d'autres codeurs MIC que G.711 et à un codage de type MICDA.

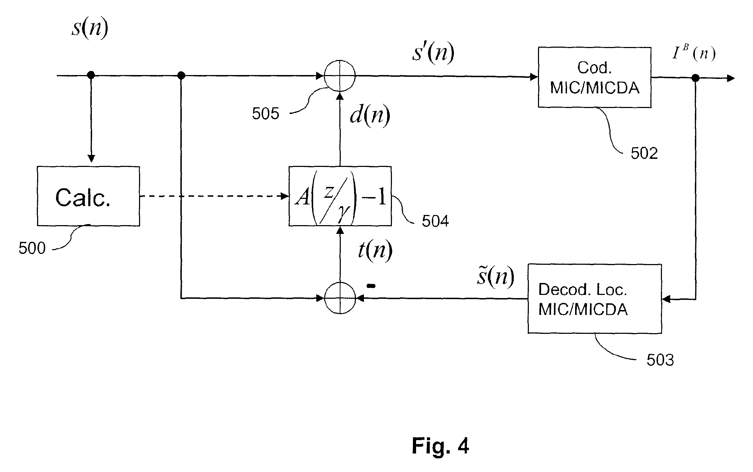

Un exemple de structure connue de rétroaction de bruit en codage MIC/MICDA est présenté à la figure 4.

Dans la suite on utilisera les notations suivantes :

$s(n)$ : signal d'entrée à coder
$s'(n)$ : signal d'entrée du codeur (signal à coder modifié)
$\tilde{s}(n)$ : signal décodé fourni par le décodeur local
$q(n) = s'(n) - \tilde{s}(n)$ : bruit de quantification du codeur

La **figure 4** illustre un exemple de mise en oeuvre de la mise en forme du bruit de codage MIC/MICDA. Ce codeur comporte un bloc de codage MIC/MICDA 502 et un décodeur local 503. Le bruit de codage $q_G(n) = s(n) - \tilde{s}(n)$ est filtré (bloc 504) et réinjecté (bloc 505) sur le signal $s(n)$. Les coefficients de prédiction sont estimés (bloc 500) à partir du signal $s(n)$ alors que dans G.711.1 (figure 3) ils sont estimés à partir du signal décodé passé au débit coeur. De façon connue, on obtient (bloc 500) typiquement le filtre $A(z/\gamma)$ à partir d'un filtre de prédiction linéaire A(z) modélisant les corrélations court-terme du signal $s(n)$, en atténuant les coefficients du filtre de prédiction linéaire A(z). Le bruit de codage sera mis en forme par le filtre $H(z) = P_1(z) = \dfrac{1}{A(z/\gamma)}$ avec comme valeur typique $\gamma = 0.92$

En effet, pour le schéma de la figure 4, partant de $S'(z) = \tilde{S}(z) + Q(z)$, avec $q(n) = s'(n) - \tilde{s}(n)$ le bruit de quantification MIC/MICDA, on peut montrer que dans le domaine de la transformée en z:

$$S(z) - \tilde{S}(z) = \frac{Q(z)}{A(z/\gamma)}$$

Autrement dit le bruit de codage "global" $q_G(n) = s(n) - \tilde{s}(n)$ correspond au bruit de quantification MIC/MICDA $q(n)$ filtré (mis en forme) par $\dfrac{1}{A(z/\gamma)}$.

La rétroaction de bruit appliquée au codage MICDA est une technique efficace pour améliorer la qualité des codeurs MIC/MICDA, en masquant le bruit de codage, particulièrement pour les signaux audio "naturels" tels que la parole ou la musique. Le schéma de la figure 4 permet de mettre en forme le bruit de codage suivant un filtre de masquage $\dfrac{1}{A(z/\gamma)}$ afin d'obtenir un rapport signal à bruit plus homogène suivant les fréquences.

Cependant, pour certains signaux moins "naturels" que la parole ou la musique, la rétroaction de bruit peut, comme c'est parfois le cas avec les systèmes bouclés, devenir instable et conduire à une dégradation ou une saturation du signal décodé. La saturation est à prendre ici au sens où l'amplitude du signal décodé dépasse les valeurs maximales représentables à précision finie (exemple: entiers signés sur 16 bits) et conduit ainsi à un écrêtage du signal.

Des exemples de signaux problématiques pour la rétroaction de bruit sont les signaux présentant des transitions rapides entre des séquences stationnaires de grande dynamique spectrale, comme par exemple une série de sinusoïdes pures de fréquences différentes séparées par de courts segments de silence.

On considère en particulier les signaux « tonaux » (les sinusoïdes pures) comme des signaux à risque pouvant engendrer un problème d'instabilité ou de saturation dans les schémas de codage avec rétroaction de bruit.

Pour ce type de signal, le filtre de masquage (ou mise en forme) estimé $\dfrac{1}{A(z/\gamma)}$ varie rapidement dans les transitions entre sinusoïdes et dans les attaques, le bruit de quantification qui est réinjecté est souvent très élevé.

Le problème de stabilité et de saturation observé avec la rétroaction de bruit est particulièrement critique en codage MICDA. En effet, le codage MICDA tel que mis en oeuvre dans G.722 repose sur une adaptation progressive des paramètres de codage (pas de quantification, coefficients de prédiction). Cette adaptation se fait échantillon par échantillon suivant un principe similaire à l'algorithme LMS (pour "Least Mean Square" en anglais) en filtrage adaptatif, ce qui implique que l'adaptation ne suit pas immédiatement les caractéristiques non stationnaires du signal à coder. Il est connu que pour certains signaux l'adaptation dans le codage MICDA seul (sans rétroaction de bruit) peut décrocher ("mistracking" en anglais), au sens où l'adaptation diverge avant de re-converger après un certain temps.

Pour les signaux problématiques, la rétroaction de bruit peut perturber l'adaptation du codage MICDA, car - en reprenant la figure 4 - le signal à coder $s(n)$ est modifié par le bruit réinjecté d $(n)$ pour former le signal $s'(n)$.

Lorsque le bruit réinjecté $d(n)$ est de niveau similaire au niveau du signal $s(n)$ - ce qui est souvent le cas dans les transitions rapides entre des séquences stationnaires de grande dynamique spectrale -, le signal $s'(n)$ à l'entrée du codeur MICDA peut devenir très "instable" suivant que les signaux $s(n)$ et $d(n)$ sont en phase ou hors-phase. Si en plus le codage MICDA a une adaptation qui décroche ("mistracking" en anglais), la rétroaction de bruit va amplifier la durée et l'ampleur du décrochage.

Pour montrer l'origine de ce phénomène on peut calculer le Rapport Signal à Bruit Perceptuel $RSB_P$ (perceptuel car il inclut l'effet de la rétroaction de bruit visant à masquer le bruit de codage) :

$$RSB_P = \frac{\sum_{n=0}^{N-1} s^2(n)}{\sum_{n=0}^{N-1}\left[s(n) - \tilde{s}(n)\right]^2}$$

On peut montrer que :

$$RSB_P = G_{MICDA}\left[\frac{RSB_Q - 1}{E_D} + 1\right]$$

où $G_{MICDA}$ est le gain de prédiction du codeur MICDA, $RSB_Q$ le Rapport Signal à Bruit du quantificateur MICDA (autour de 24 dB pour un quantificateur de Laplace à 5 bits) et $E_D$ l'énergie de la réponse impulsionnelle $f_D(n)$ du filtre de masquage.

D'après cette formule, on voit que plus le gain $G_{MICDA}$ est faible, et/ou plus l'énergie $E_D$ est forte, et plus $RSB_P$ est faible. Ces deux conditions ($G_{MICDA}$ faible et $E_D$ forte) sont réunies dans des situations de transitions entre deux séquences de sinusoïdes pures car le gain $G_{MICDA}$ devient très faible (le codage MICDA adapté à la première sinusoïde pure prend un certain temps avant de se réadapter à la seconde sinusoïde pure) et $E_D$ est forte car les sinusoïdes donnent des filtres de réinjection très résonants. Dans ce cas le codeur MICDA sera instable ou proche de l'instabilité.

De tels phénomènes d'instabilité et de saturation ne sont pas acceptables car ils peuvent générer des artefacts audibles (ex: pics d'amplitude localisés dans le temps), voire des "chocs acoustiques" en cas de saturation complète du niveau temporel du signal.

Il existe donc un besoin de prévenir et contrôler les phénomènes d'instabilité et de saturation dans les structures de codage avec rétroaction, en particulier pour les signaux problématiques tels que les séries de sinusoïdes pures à différentes fréquences.

La présente invention vient améliorer la situation.

A cet effet, elle propose un procédé de contrôle de mise en forme d'un bruit de codage lors du codage de type MICDA d'un signal d'entrée audionumérique, la mise en forme de bruit s'effectuant par la mise en oeuvre d'une rétroaction comportant un filtrage du bruit. Le procédé est tel qu'il comporte les étapes suivantes:

- obtention d'un paramètre d'indication de forte dynamique spectrale du signal, indiquant un de risque d'instabilité de la rétroaction;
- détection d'un risque d'instabilité par comparaison du paramètre d'indication à au moins un seuil prédéterminé;
- limitation de la rétroaction en cas de détection de risque d'instabilité;
- réactivation progressive de la rétroaction sur un nombre prédéterminé de trames postérieures à la trame courante pour laquelle la rétroaction a été limitée.

Ainsi, le procédé permet de faire une détection rapide et efficace de signaux potentiellement problématiques et risquant d'engendrer des phénomènes d'instabilité dans la rétroaction. Ce phénomène est ainsi évité puisqu'une limitation de la rétroaction est effectuée lors de l'apparition de ces signaux à risques. Cette limitation peut même consister en une désactivation complète de cette rétroaction.

Le procédé a donc une action préventive sur l'apparition de phénomènes gênants. La réactivation de la boucle de rétroaction se fait ensuite de façon progressive de sorte de ne pas engendrer de variation trop brusques des signaux codés.

Dans un mode de réalisation particulier, le paramètre d'indication de forte dynamique spectrale du signal est le second coefficient de réflexion issu d'une analyse de prédiction linéaire du signal d'entrée ou encore le second coefficient de réflexion issu d'une analyse de prédiction linéaire du signal décodé.

Ainsi, ce paramètre est bien représentatif des signaux à risque et indique donc le risque d'instabilité de la rétroaction. Ce paramètre est obtenu lors d'une analyse de prédiction linéaire effectuée pour calculer notamment le filtre de mise en forme du bruit. Il est donc avantageux de le réutiliser ici pour contrôler la rétroaction.

Dans un autre mode de réalisation, le paramètre d'indication de forte dynamique spectrale du signal est un rapport signal à bruit entre le signal d'entrée et le bruit.

Ce paramètre permet de mesurer le risque d'instabilité de la rétroaction pour tout type de signaux à risque, pas seulement ceux présentant des sinusoïdes.

Dans un mode possible de réalisation, la limitation de la rétroaction s'effectue par la mise à zéro d'un coefficient de pondération à appliquer aux paramètres de filtrage du bruit.

Cela revient à annuler l'action du filtre de mise en forme de bruit et donc à désactiver la rétroaction, de façon simple.

Dans une variante de réalisation, la limitation de la rétroaction s'effectue par application d'un gain de valeur nulle en sortie du filtrage de bruit.

Ainsi, le filtre reste invariant mais son action est annulée en sortie par l'application de ce gain. Ceci permet de désactiver la rétroaction sans modifier le calcul du filtre.

De façon simple, la réactivation progressive de la rétroaction s'effectue par l'application d'un coefficient de pondération aux paramètres de filtrage, le coefficient de pondération étant défini par incrémentation sur le nombre prédéterminé de trames, dans le cas où la désactivation de la boucle de rétroaction s'effectue par la mise à zéro d'un coefficient de pondération.

Dans le cas où la désactivation de la boucle de rétroaction s'effectue par l'application d'un gain de valeur nulle en sortie du filtrage de bruit, la réactivation progressive de la rétroaction s'effectue par l'application d'une valeur de gain croissante en sortie du filtrage de bruit sur le nombre prédéterminé de trame.

Le procédé s'applique avantageusement dans le cas des codeurs de type hiérarchique et peut être mis en oeuvre à la fois lors du codage coeur et lors du codage d'amélioration d'un codage hiérarchique.

Ainsi, non seulement on évite les problèmes d'instabilité lors du codage coeur mais également lors du codage d'amélioration, sans pour autant augmenter en proportion la complexité du codage.

La présente invention se rapporte également à un codeur de type MICDA de signal audionumérique comportant une rétroaction de mise en forme d'un bruit de codage contenant un module de filtrage du bruit. Le codeur est tel qu'il comporte un module de contrôle de mise en forme de bruit incluant:

- des moyens d'obtention d'un paramètre d'indication de forte dynamique spectrale du signal, indiquant un risque d'instabilité de la rétroaction;
- des moyens de détection d'un risque d'instabilité par comparaison du paramètre d'indication à au moins un seuil prédéterminé;
- des moyens de limitation de la rétroaction en cas de détection de risque d'instabilité;
- des moyens de réactivation progressive de la rétroaction sur un nombre prédéterminé de trames postérieures à la trame courante pour laquelle la rétroaction a été limitée.

Elle se rapporte aussi à un programme informatique comportant des instructions de code pour la mise en oeuvre des étapes du procédé de contrôle selon l'invention, lorsque ces instructions sont exécutées par un processeur.

L'invention se rapporte enfin à un moyen de stockage lisible par un processeur mémorisant un programme informatique tel que décrit.

D'autres caractéristiques et avantages de l'invention apparaîtront plus clairement à la lecture de la description suivante, donnée uniquement à titre d'exemple non limitatif, et faite en référence aux dessins annexés, sur lesquels:

- la figure 1 illustre un codeur de type MICDA à codes imbriqués selon l'état de l'art et tel que décrit précédemment;
- la figure 2 illustre un décodeur de type MICDA à codes imbriqués selon l'état de l'art et tel que décrit précédemment;
- la figure 3 illustre la mise en forme du bruit appliquée dans un codeur de type normalisé G.711.1 selon l'état de l'art et tel que décrit précédemment;
- la figure 4 illustre un exemple de mise en forme de bruit dans le cas d'un codeur MIC/MICDA selon l'état de l'art et tel que décrit précédemment;
- la figure 5 illustre un mode de réalisation d'un codeur de type MIC/MICDA avec une couche d'amélioration comportant un module de contrôle de mise en forme de bruit selon l'invention ;
- la figure 6 illustre une variante de réalisation d'un codeur comportant un module de contrôle de mise en forme de bruit selon l'invention ;
- la figure 7 illustre un organigramme représentant les étapes d'un mode de réalisation du procédé de contrôle de mise en forme de bruit selon l'invention;
- la figure 8 illustre un organigramme représentant les étapes d'une variante de réalisation du procédé de contrôle de mise en forme de bruit selon l'invention;

- la figure 9 illustre une variante de réalisation du procédé et du module de contrôle de mise en forme de bruit selon l'invention pour un deuxième exemple de codeur de type MIC/MICDA avec une couche d'amélioration; et
- la figure 10 représente un mode de réalisation possible d'un codeur selon l'invention.

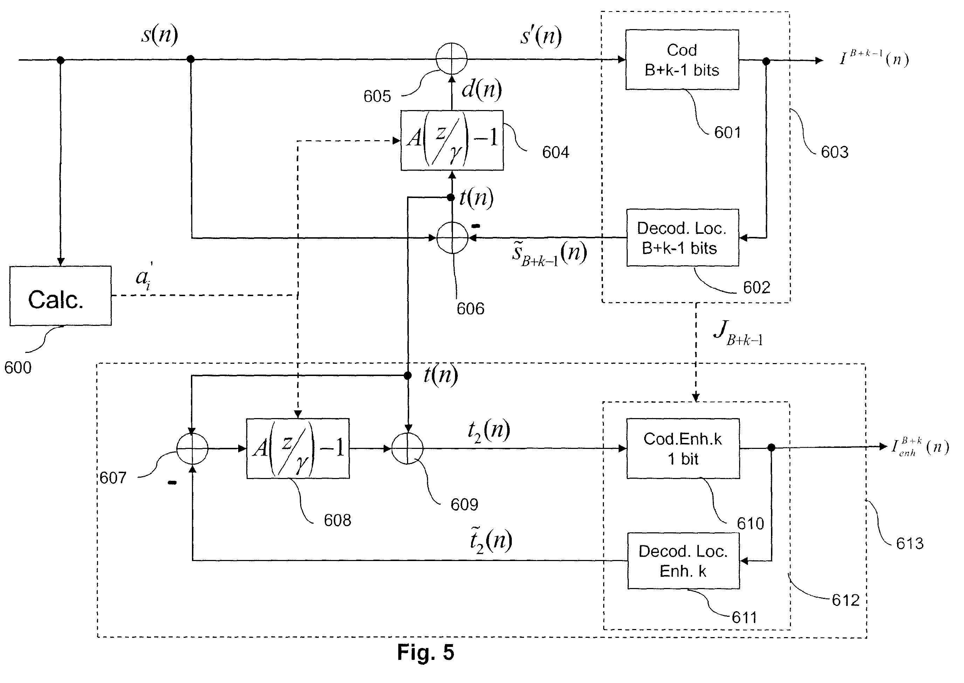

En référence à la **figure 5,** un codeur à codes imbriqués intégrant l'invention est maintenant décrit.

Ce codeur fonctionne sur des signaux échantillonnés à 8 kHz avec des trames de 5 ms. Il comporte une mise en forme du bruit de codage, laquelle est mise en oeuvre par rétroaction de bruit (étapes 606, 604, 605). On entend ici par rétroaction de bruit les étapes d'obtention d'un bruit (606), de filtrage du bruit (604) et de modification d'un signal (605). A noter qu'ici le signal modifié par la rétroaction est le signal d'entrée $s(n)$ mais de façon équivalente dans le cas d'un codage MICDA un autre signal peut être modifié avant l'étape de codage (601), par exemple le signal modifié par la rétroaction peut être la différence entre le signal d'entrée $s(n)$ et le signal prédit par le codage MICDA, avant d'appliquer la quantification scalaire MICDA.

Dans l'exemple décrit ici, le codage s'effectue avec des étages d'amélioration apportant un bit par échantillon supplémentaire. Ce choix est pris ici de façon à simplifier la présentation du codeur. Il est cependant clair que l'invention décrite ci-après s'applique au cas plus général où les étages d'amélioration apportent plus d'un bit par échantillon.

Par ailleurs, le terme "codeur coeur" est utilisé au sens large dans ce document. Ainsi on peut considérer comme "codeur coeur" un codeur multi-débits existant comme par exemple UIT-T G.722 à 56 ou 64 kbit/s.

Ce codeur comporte un étage de codage de débit coeur 603 avec quantification (bloc 601) sur B+k-1 bits, de type par exemple codage MICDA tel que le codeur normalisé G.722 ou G.727 ou MIC pour "Modulation par Impulsions Codées" ou PCM en anglais (pour "Pulse code Modulation") tel que le codeur normalisé G.711.

Cet étage de codage coeur comprend un module de décodage local (bloc 602).

Le codeur de débit coeur comporte une boucle de rétroaction de mise en forme de bruit similaire à celle décrite en référence à la figure 4. Ainsi le bruit de codage est calculé (bloc 606), filtré (bloc 604) et réinjecté (bloc 605).

Le codeur comporte également un étage d'amélioration 613 apportant un bit par échantillon afin de passer du débit B+k-1 bits par échantillon à B+k bits par échantillon.

Cet étage d'amélioration est optionnel pour la mise en oeuvre de l'invention puisque seul l'étage de codage coeur peut mettre en oeuvre le procédé de contrôle de mise en forme de bruit comme décrit ultérieurement.

Cet étage d'amélioration utilise un quantificateur (610) et un décodeur local (bloc 611) et réalise une mise en forme du bruit qui utilise le même filtre de masquage $A(z/_\gamma)$-1 que le codeur coeur.

Ainsi le codeur coeur et l'étage d'amélioration repose sur le même filtre de mise en forme de bruit ($A(z/_\gamma)$-1) (blocs 604, 608) dont les coefficients sont calculés par le bloc 600.

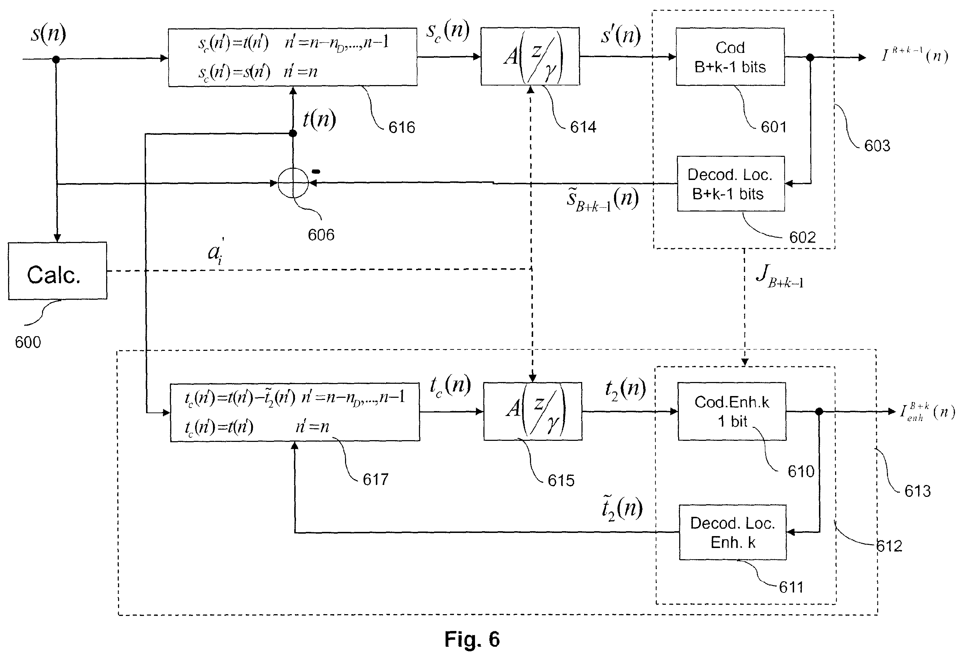

La **figure 6** donne une solution équivalente à celle de la figure 5 mais donne une autre interprétation pour la partie filtrage. A la place d'utiliser des prédicteurs $A(z/\gamma)$-1 on utilise des filtres $A(z/\gamma)$ (modules 614 et 615) dont l'entrée (respectivement $s_c(n)$ et $t_c(n)$) sont préparée par les blocs 616 et 617 respectivement, de façon suivante :

$$s_c(n') = t(n') \quad n' = n - n_D, ..., n-1$$

$$s_c(n') = s(n') \quad n' = n$$

et

$$t_c(n') = t(n') - \tilde{t}_2(n') \quad n' = n - n_D, ..., n-1$$

$$t_c(n') = t(n') \quad n' = n$$

Le bloc 600 représente le module de contrôle de mise en forme du bruit selon l'invention.

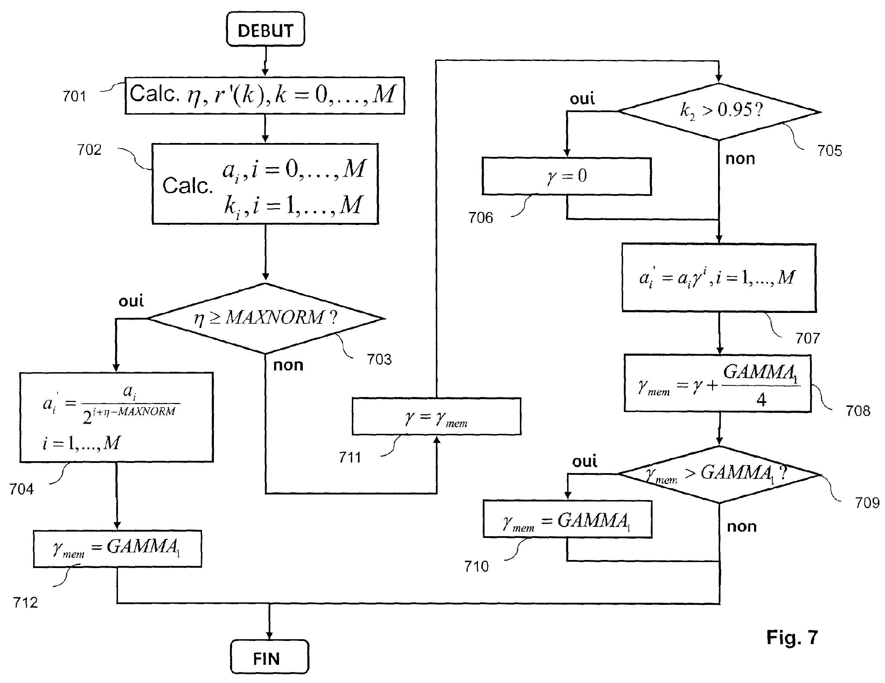

Dans cet exemple, le module de contrôle 600 effectue entre autre, un calcul des coefficients du filtre de masquage à partir du signal d'entrée s(n) comme expliqué ultérieurement en référence à la figure 7. Ce calcul des coefficients du filtre de masquage peut également s'effectuer à partir du signal décodé comme dans le cas du codeur G.711.1 décrit en référence à la figure 3.

Ce module comporte notamment des moyens d'obtention d'un paramètre d'indication de risque d'instabilité de la rétroaction. Plusieurs exemples d'obtention de ce paramètre sont explicités par la suite.

Ce module comporte en outre, des moyens de détection d'un risque d'instabilité de la rétroaction sous forme par exemple de comparateur qui va effectuer une comparaison du paramètre obtenu, à un seuil prédéterminé.

Le module comporte des moyens de limitation de la rétroaction par exemple par la mise à 0 ou à une valeur faible d'un gain ou d'un facteur de pondération comme expliqué par la suite.

Il comporte également des moyens de réactivation progressive de la rétroaction sur un nombre prédéterminé de trames postérieures à la trame courante pour laquelle la rétroaction a été limitée. Ces moyens de réactivation progressive sont par exemple des moyens d'attribution de valeurs de pondération ou de gain augmentant progressivement au fur et à mesure du nombre prédéterminé de trames.

Ce module de contrôle met en oeuvre le procédé de contrôle de mise en forme de bruit représenté sous forme d'organigramme, dans un mode de réalisation décrit maintenant en référence à la **figure 7.**

Dans ce mode de réalisation, les étapes 701 à 704 sont optionnelles et ne font pas nécessairement partie du procédé de contrôle selon l'invention.

On définit ici M comme étant l'ordre de prédiction linéaire, utilisée pour la mise en forme de bruit, dont la valeur typique est M=4.

Ainsi, à l'étape 701, un calcul d'autocorrélations, r(k), k=0,...,M, du signal $s(n)$, où M est l'ordre de prédiction linéaire, est effectué. A noter que ces autocorrélations pourraient être également calculées à partir du signal décodé $\tilde{s}(n)$ comme dans G.711.1, sans changer la nature du procédé.

Pour cela, le signal $s(n)$ est d'abord pré-accentué par un filtre de type $(1-\beta_e Z^{-1})$ pour obtenir:

$$s^{pre}(n) = s(n) - \beta_e s(n-1)$$

où le facteur $\beta_e$ est calculé comme dans G.711.1 suivant la formule suivante:

$$\beta_e = 1 - 0.007813 c_{zc1}$$

où $C_{zc1}$ est le nombre de passage par zéros.

Ensuite un filtre de prédiction linéaire (LPC) d'ordre M=4 est estimé, une fois par trame (toutes les 5 ms). Pour ce faire le signal pré-accentué $s^{pre}(n)$ est pondéré par une fenêtre asymétrique et hybride cosinus-Hamming de 80 échantillons (10 ms) centrée sur le début de la trame courante pour obtenir $s_w^{pre}(n)$. L'autocorrélation est ensuite calculée suivant la formule:

$$r(k) = \sum_{n=k}^{79} s_w^{pre}(n) s_w^{pre}(n-k), k = 0,\ldots,M$$

Les corrélations ainsi obtenues sont modifiées en $r'(k)$ avec une extension de bande de 120 Hz incluant un facteur de correction de 1/1.0001 - qui représente un plancher de bruit ("noise floor" en anglais) de 40 dB - comme dans G.711.1:

$$r'(k) = \begin{cases} r(k) & k = 0 \\ w_{lag}(k) r_{L0}(k) & k = 1,\ldots,M \end{cases}$$

où

$$w_{lag}(k) = \frac{1}{1.0001} \exp\left[ -\frac{1}{2}\left( \frac{2\pi f_0 k}{f_s} \right)^2 \right]$$

avec $f_0$=120 Hz et $f_s$=8000 Hz.

A l'étape 701, on calcule également un facteur de normalisation qui compte le nombre de décalage binaire en représentation arithmétique à virgule fixe comme dans G.711.1 défini par:

$$\eta = 30 - \left\lfloor \log_2\left(r(0)\right) \right\rfloor$$

où $\lfloor \bullet \rfloor$ représente l'arrondi à l'entier inférieur.

L'étape 702 correspond à l'algorithme de Levinson-Durbin décrit dans la recommandation UIT-T G.711.1 qui fournit comme résultat:

- les coefficients de prédiction $a_i$, i=0...M
- les coefficients de réflexion $k_i$, i=1,...,M, associés à une réalisation en treillis du filtre de prédiction linéaire.

L'algorithme de Levinson-Durbin est un algorithme récursif dont les étapes sont rappelées ci-dessous:

- Numéro d'itération $i$ =1, $a_0^{[0]} = 1.0$, and $E^{[0]} = r'_{L0}(0)$

- Calculer $k_i = -\dfrac{1}{E^{[i-1]}} \left( r'_{L0}(i) + \displaystyle\sum_{j=1}^{i-1} a_k^{[i-1]} r'_{L0}(i-j) \right)$

- Fixer $a_i^{[i]} = k_i$

- Calculer $a_j^{[i]} = a_j^{[i-1]} + k_i a_{i-j}^{[i-1]}$ for $j$ =1,...,$i$-1

- Calculer $E^{[i]} = (1 - k_i^2) E^{[i-1]}$

- Incrémenter $i$ de 1 et aller à l'étape 2 jusqu'à $i$ =M.

Le résultat est donné par $a_j = a_j^{[M]}$, $j$=1,…,M qui sont les coefficients du prédicteur linéaire

$$A(z) = 1 + a_1 z^{-1} + a_2 z^{-2} + a_3 z^{-3} + a_4 z^{-4}$$

et par les coefficients de réflexion $k_i$ qui correspondent à une réalisation en treillis du filtre A(z) comme expliqué dans la référence de J.D. Markel et A. H. Gray « Linear Prediction of Speech », Springer-verlag, 1976..

Le coefficient de réflexion $k_1$ représente la "pente" du spectre court-terme du signal modélisé par prédiction linéaire, tandis que le coefficient de réflexion $k_2$ est un indicateur de la dynamique spectrale du signal car il est associé au facteur de qualité (degré de résonance) du prédicteur linéaire d'ordre 2 trouvé à la deuxième itération de l'algorithme de Levinson-Durbin.

Dans l'exemple illustré ici, ce coefficient de réflexion $k_2$ constitue un paramètre d'indication de risque d'instabilité de la rétroaction telle qu'illustrée en référence à la figure 7.

On montre ici que le coefficient $k_2$ permet la détection des signaux à très forte surtension en particulier les sinusoïdes.

Comme expliqué précédemment, les signaux à forte surtension, en particulier les sinusoïdes, sont des signaux à risque (pour la rétroaction de bruit) qu'il convient de détecter. La détection de ces signaux à risque peut-être effectuée en examinant le deuxième coefficient de corrélation partielle en sortie de l'algorithme de Levinson-Durbin qui est utilisé pour calculer le filtre $A(z)$ à partir duquel est calculé le filtre de pondération $W(z)=A(z/\gamma)$.

Nous allons calculer le deuxième coefficient de corrélation partielle par l'algorithme de Levinson-Durbin pour une sinusoïde $s(n)$ =cos($n\omega T$) de pulsation $\omega = \dfrac{2\pi f}{T}$ à la fréquence d'échantillonnage 1/$T$ qui possède une surtension au niveau de sa fréquence. Sa fonction de corrélation sera égale à :

$$r'_{L0}(k) = \cos(k\omega T) .$$

La première étape de l'algorithme donne :

$$k_1 = -\cos(\omega T)$$

$$a_1^1 = -\cos(\omega T)$$

$$E^1 = \frac{1}{2}\left[1 - \cos(2\omega T)\right]$$

Et la deuxième étape :

$$k_2 = 1$$

$$a_1^2 = -2\cos(\omega T)$$

$$a_2^2 = 1$$

$$E^1 = 0$$

Comme l'erreur de prédiction est nulle on déduit qu'une sinusoïde est prédictible à partir de 2 échantillons:

$$x(n) = 2\cos(\omega T)x(n-1) - x(n-2)$$

Du fait des divers amortissements de la fonction de corrélation avant le calcul du prédicteur, le coefficient de surtension n'est pas égal à sa valeur idéale. Pour une sinusoïde à 3000 Hz on trouve typiquement $k_2 = 0.97$ . La solution mise en oeuvre consiste donc à détecter les signaux à forte surtension qui fournissent un coefficient de corrélation partielle $k_2$ supérieur à un seuil typiquement 0.95.

L'étape 703 vérifie si le facteur de normalisation $\eta$ dépasse une valeur limite *(MAXNORM=16)*, ce qui permet de détecter les signaux de faibles niveaux (silence ou signal très faible) comme dans G.711.1. Dans le cas où ce facteur de normalisation dépasse un seuil prédéterminé, $\eta \geq MAXNORM$, les coefficients de prédiction linéaire $a_i$, $i = 0,...,M$ sont atténués (étape 704), ce qui revient à réduire l'effet du filtre de masquage (ou mise en forme) de bruit.

Dans ce cas, le filtre de masque $W$(z) -1 est obtenu en utilisant les coefficients $a_i$, $i = 0,...,M$ obtenus à l'étape 704 selon l'équation suivante:

$$W(z) - 1 = \sum_{i=1}^{4} a_i' z^{-i} = \sum_{i=1}^{4} \frac{a_i}{2^{i+\eta-MAXNORM}} z^{-i}$$

Dans le cas contraire, le filtre de mise en forme de bruit est défini suivant la formule:

$$W(z) - 1 = \sum_{i=1}^{4} a_i' z^{-i} = \sum_{i=1}^{4} a_i \gamma^j z^{-i}$$

On suppose que la valeur du facteur d'atténuation $\gamma$ est gardée en mémoire et récupérée au début du traitement de chaque trame. Cette valeur gardée en mémoire est notée $\gamma_{mem}$ . Cette opération de récupération est effectuée à l'étape 711.

Dans les trames où un signal de faible niveau est détecté ($\eta \geq MAXNORM$), le paramètre $\gamma_{mem}$ est réinitialisé à une valeur égale par exemple à $GAMMA_1$ = 0.92 à l'étape 712.

Le procédé de contrôle de mise en forme du bruit comporte une étape 705 de détection d'un risque d'instabilité par comparaison du paramètre d'indication à au moins un seuil prédéterminé.

Plusieurs techniques existent pour détecter des signaux à forte dynamique spectrale tels que les sinusoïdes.

Dans le cas où on dispose d'une analyse de prédiction linéaire avec des coefficients de réflexion $k_2$ comme décrit ici, il est avantageux de réutiliser le deuxième coefficient de réflexion comme décrit précédemment.

Dans cet exemple de mise en oeuvre, l'étape 705 consiste à vérifier si le second coefficient de réflexion dépasse une valeur prédéterminée, ici 0,95 ($k_2 > 0.95$). Ce test permet de détecter les signaux à forte dynamique spectrale et permet de détecter en particulier les sinusoïdes pures (sans modulation forte d'amplitude, mais d'amplitude relativement constante).

Si le test s'avère positif, une étape de limitation de la rétroaction est effectuée puisque le risque d'instabilité de cette rétroaction est avéré.

Une limitation possible est par exemple la désactivation de la rétroaction, à l'étape 706, en fixant le coefficient $\gamma$ à 0.

Dans une variante le coefficient $\gamma$ est fixé à une valeur très faible mais non nulle, par exemple 0.001. Cette variante correspond à non pas à une désactivation complète de la rétroaction, mais à une limitation de la rétroaction, ce qui produit le même effet (éviter une instabilité ou une saturation).

De façon équivalente il serait possible dans les trames où $\gamma = 0$ de fixer $s'(n) = s(n)$ aux figures 5 et 6, ce qui revient à n'injecter aucun bruit sur le signal $s(n)$.

Les coefficients de prédiction linéaire $a_i$, $i = 0,...,M$ sont pondérés par $\gamma$ à l'étape 707 afin de calculer les coefficients de $A(z/\gamma)$-1.

La valeur $\gamma_{mem}$ gardée en mémoire est ensuite mise à jour pour la prochaine trame à l'étape 708. Cette valeur est d'abord calculée en incrémentant $\gamma$ de $\dfrac{GAMMA_1}{4}$ où $GAMMA_1 = 0.92$ par exemple et le résultat est saturé à $GAMMA_1$ aux étapes 709 et 710. La division par 4 permet de retrouver après 4 trames une valeur de $GAMMA_1$.

Dans le cas où $\gamma$ est fixé à une valeur très faible ($GAMMA_0=0.001$) en 706, on peut incrémenter $\gamma$ par des valeurs de $\dfrac{GAMMA_1 - GAMMA_0}{4}$.

Ce cas de figure est décrit pour un nombre prédéterminé de trames égal à 4 mais cette étape peut bien évidemment être effectuée sur un nombre de trame supérieur ou inférieur à 4. De même, les valeurs d'incrémentation peuvent être différentes et l'incrémentation peut s'effectuer avec des pas répartis de façon non-linéaire.

Ces étapes 708 à 710 reviennent à effectuer une réactivation progressive de la rétroaction sur un nombre prédéterminé de trames postérieures (ici 4 trames) à la trame courante pour laquelle la rétroaction a été limitée.

Ainsi le procédé de contrôle de mise en forme de bruit selon l'invention consiste à détecter les signaux problématiques susceptibles de provoquer une instabilité ou une saturation du signal par un test effectué dans ce mode de réalisation, sur le second coefficient de réflexion et de limiter la rétroaction de bruit dès que ce test est positif. Après une détection positive, la valeur de $\gamma$ est progressivement augmentée (après 4 trames dans l'exemple décrit ici) jusqu'à sa valeur "normale" $GAMMA_1$. La valeur courante de $\gamma$ est copiée dans $\gamma_{mem}$ afin de passer la valeur de ce paramètre d'une trame à la suivante.

L'incrémentation successive de $\gamma$ distribuée sur plusieurs trames permet de rétablir la rétroaction de bruit progressivement, et évite au système bouclé de diverger suite à une réactivation trop brusque de la rétroaction qui peut engendrer des variations brusques des statistiques "locales" du signal.

Dans une variante de réalisation du procédé de contrôle de la mise en forme de bruit, le paramètre d'indication d'un risque d'instabilité est différent.

Par exemple, une mesure d'aplatissement spectral ("spectral flatness" en anglais) est effectuée en calculant le rapport entre la moyenne arithmétique et la moyenne géométrique des raies spectrales du spectre de puissance calculé à partir du signal court-terme fenêtré par la fenêtre LPC. Cette mesure tend vers une très grande valeur pour des spectres ne contenant qu'une raie (sinusoïde pure).

Dans cette variante de réalisation, le seuil de détection permettant de détecter un signal de grande dynamique à l'étape 705, dépend du contexte (longueur de trame, fenêtre..). Cette variante implique cependant de calculer une transformation temps-fréquences (de type Fourier) à court-terme et de calculer la mesure décrite ci-dessus.

Dans une autre variante de réalisation, on ne s'attache pas à détecter a priori les signaux à forte dynamique mais à détecter de façon non paramétrique et a posteriori des signaux problématiques qui engendrent des instabilités sur la rétroaction. Le paramètre de risque d'instabilité est dans ce mode de réalisation, le rapport signal à bruit instantané entre le signal d'entrée $s(n)$ et le bruit de codage $t(n)$ définis aux figures 5 et 6. La détection de signaux problématiques à l'étape 705, se fait alors en fixant un seuil sur le rapport signal à bruit, par exemple dès que ce rapport est en dessous de 5 dB. Dans ce mode de réalisation, il est nécessaire de calculer une moyenne du signal d'entrée et du bruit afin de pouvoir calculer des rapports signal à bruit qui soient bien définis.

Ce type de détection a posteriori intervient cependant souvent quand les problèmes d'instabilité ou de saturation sont déjà en partie observables. De plus cette variante présente l'inconvénient d'avoir un assez fort taux de fausse alarme.

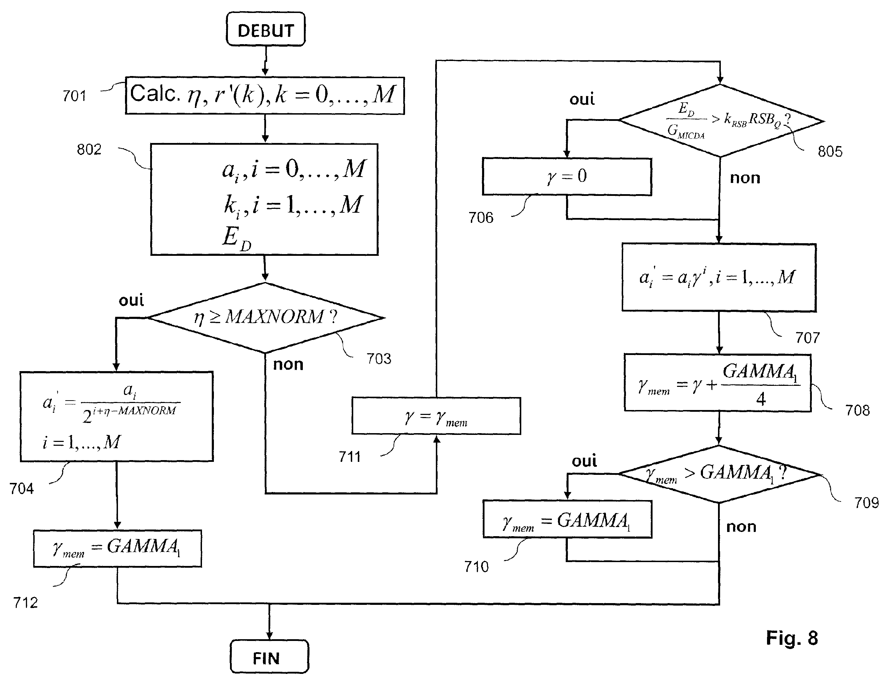

Un autre mode de réalisation pour l'obtention du paramètre d'indication de risque d'instabilité de la rétroaction et de la détection d'un risque d'instabilité est illustré en **figure 8.**

Cet algorithme ne diffère de celui décrit en référence à la figure 7 que par les étapes 702 devenue 802 et 705 devenue 805.

En effet, à l'étape 802, on obtient non seulement les coefficients du prédicteur linéaire $a_i$, i=0...M et les coefficients de réflexion $k_i$, i=1,...,M, comme décrit en référence à la figure 7, mais on obtient également l'énergie du filtre de masquage $E_D$ de la trame courante de la façon suivante:

$$E_D = \sum_{n=0}^{\infty} f_D(n)^2$$

qui peut être approximé par le gain de prédiction en sortie de l'algorithme de Levinson-Durbin. $E^{[M]}$ divisé par $r'_{L0}(0)$.

En fait le filtre de masquage est égal à $H(z) = \dfrac{1}{1 + \sum_{i=1}^{M} a_i \gamma^i z^{-i}}$ et pour calculer son énergie il convient d'utiliser l'algorithme qui recalcule les prédicteurs successifs d'ordre inférieur en partant de $A(\dfrac{z}{\gamma})$ ainsi que les coefficients de corrélation partielle.

$$p_D^j(0) = 1, \ p_D^m(j) = a_j \gamma^j \quad j = 1,...,M$$

$$m = M,...,1$$

$$k_m = p_D^m(m)$$

$$p_D^{m-1}(j) = \frac{p_D^m(j) - k_m p_D^m(m-j)}{1 - k_m^2} \quad j = 1,...,m-1$$

L'énergie $E_D$ du filtre résultant calculée en 702 sera donné par :

$$E_D = \prod_{j=1}^{M} 1 - k_j^2$$

Le paramètre d'indication de risque d'instabilité est donné alors par $\dfrac{E_D}{G_{MICDA}}$ avec $G_{MICDA}$ le gain de prédiction du codeur MICDA estimé sur la trame précédente. Il est approximé par le quotient du seuil de saturation $V(n)^2$ du quantificateur, éventuellement filtré, par l'énergie du signal d'entrée $r'_{L0}(0)$.

L'étape de détection d'un risque d'instabilité 805, s'effectue alors par comparaison du paramètre d'indication $\dfrac{E_D}{G_{MICDA}}$ à un seuil défini ici comme le rapport signal à bruit du quantificateur MICDA multiplié par un facteur $k_{RSB}$ qui règle le dégrée de risque $(k_{RSB} RSB_Q)$.

$RSB_Q$ est en effet le rapport signal à bruit du quantificateur MICDA (1/0.00414≈241 de l'ordre de 24 dB pour un quantificateur de Laplace à 5 bits). La valeur de $RSB_Q$ pour différents nombres de bits et une densité de probabilité de Laplace est donnée dans la table II de l'article de Paez et Glisson « Minimum Mean-Squared-Error Quantization in Speech PCM and DPCM Systems » de la revue IEEE Trans. Communications d'avril 1972 PP.225-230.

L'étape de limitation de la rétroaction de l'étape 706 peut également s'effectuer de différentes façons.

Dans un mode de réalisation différent, la rétroaction de bruit est désactivée, non pas en mettant le coefficient $\gamma$ à 0, mais en appliquant un facteur d'échelle (ou gain) $g$ de valeur nulle sur la sortie du filtre $W(z)$ -1.

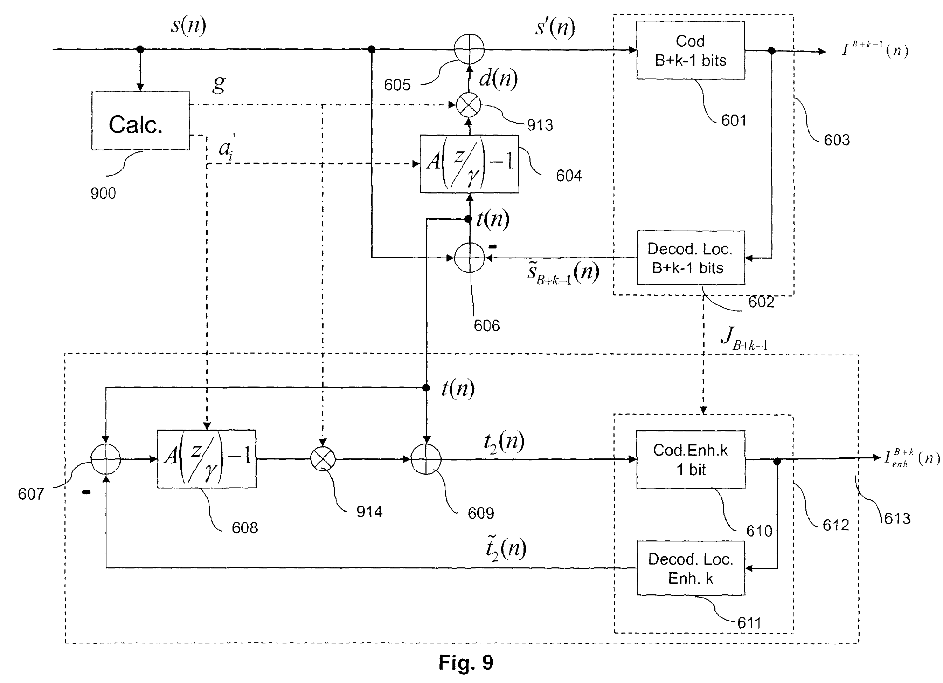

Ce mode de réalisation est illustré en référence à la **figure 9.**

Cette figure illustre un codeur hiérarchique comme représenté en figure 5, avec les mêmes éléments. La seule différence provient du module de contrôle de la mise en forme de bruit 900 qui délivre en 913, en sortie du module de filtrage 604 pour le codage coeur et en 914 en sortie du module de filtrage 608 pour le codage d'amélioration, un gain g qui lorsqu'il est mis à 0, désactive la rétroaction.

Ce facteur $g$ est mémorisé dans $g_{mem}$ de la même façon que pour le paramètre $\gamma$ dont les valeurs sont mis en mémoire dans $\gamma_{mem}$ à l'étape 711 de la figure 7.

Dans le bloc 900, le calcul des coefficients du filtre $W(z)$ -1 est donc similaire au bloc 600, sauf que dans le cas où $\eta < MAXNORM$ on fixe $\gamma = GAMMA_1 = 0.92$ . Le bloc 900 fournit de plus, la valeur du gain g applicable sur la trame courante en fonction de $k_2$ : si $k_2 > 0.95$, alors $g = 0$.

De façon alternative, le gain $g$ est fixé à une valeur très faible mais non nulle, par exemple 0.001. Cette variante correspond à non pas à une désactivation complète de la rétroaction, mais à une limitation de la rétroaction.

Le rétablissement progressif de la rétroaction de bruit se fait dans cette variante en faisant passer progressivement la valeur de g de 0 à 1. Par exemple, dans les trames qui suivent une détection $k_2 > 0.95$ et dans lesquelles $k_2 \leq 0.95$ on pourra fixer la valeur de $g$ à 0.25, 0.5, 0.75 et 1 dans les trames respectives suivantes.

Ces valeurs peuvent bien évidemment être adaptées suivant la valeur de limitation donnée pour g (ex: g=0.001 en cas de détection de risque d'instabilité).

Par ailleurs, dans les trames où un signal de faible niveau est détecté en 703 ($\eta \geq MAXNORM$), gain $g_{mem}$ est rétabli à une valeur à 1 de façon similaire à l'étape 712 de la figure 7 qui rétablit la valeur de $\gamma$.

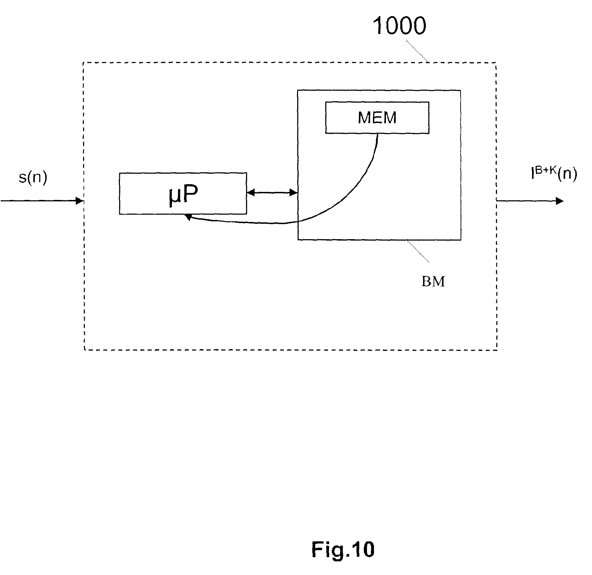

Un exemple de réalisation 1000 d'un codeur selon l'invention est maintenant décrit en référence à la **figure 10.**

Matériellement, un codeur tel que décrit selon les modes de réalisation des figures 5, 6 et 9 au sens de l'invention comporte typiquement, un processeur $\mu$P coopérant avec un bloc mémoire BM incluant une mémoire de stockage et/ou de travail, ainsi qu'une mémoire tampon MEM précitée en tant que moyen pour mémoriser par exemple les valeurs de seuil de détection d'instabilité ou toutes autres données nécessaire à la mise en oeuvre du procédé de contrôle de mise en forme de bruit tel que décrit en référence aux figures 5, 6, 7, 8 et 9. Ce codeur reçoit en entrée un signal numérique s(n) et délivre des indices de quantification multiplexés $I^{B+K}$.

Le bloc mémoire BM peut comporter un programme informatique comportant les instructions de code pour la mise en oeuvre des étapes du procédé selon l'invention lorsque ces instructions sont exécutées par un processeur $\mu$P du codeur et notamment les étapes d'obtention d'un paramètre d'indication de risque d'instabilité de la rétroaction, de détection d'un risque d'instabilité par comparaison du paramètre d'indication à au moins un seuil prédéterminé, de limitation de la rétroaction en cas de détection de risque d'instabilité et de réactivation progressive de la rétroaction sur un nombre prédéterminé de trames postérieures à la trame courante pour laquelle la rétroaction a été limitée.

De manière plus générale, un moyen de stockage, lisible par un ordinateur ou un processeur, intégré ou non au codeur, éventuellement amovible, mémorise un programme informatique mettant en oeuvre un procédé de contrôle de mise en forme de bruit selon l'invention.

Les figures 7 et 8 peuvent par exemple illustrer l'algorithme d'un tel programme informatique.

## Revendications

1. Procédé de contrôle de mise en forme d'un bruit de codage lors du codage de type MICDA d'un signal d'entrée audionumérique, la mise en forme de bruit s'effectuant par la mise en oeuvre d'une rétroaction comportant un filtrage du bruit, **caractérisé en ce qu'**il comporte les étapes suivantes:

   - obtention (702) d'un paramètre d'indication de forte dynamique spectrale du signal, indiquant un risque d'instabilité de la rétroaction;
   - détection (705) d'un risque d'instabilité par comparaison du paramètre d'indication à au moins un seuil prédéterminé;
   - limitation (706) de la rétroaction en cas de détection de risque d'instabilité;
   - réactivation progressive (708, 709, 710) de la rétroaction sur un nombre prédéterminé de trames postérieures à la trame courante pour laquelle la rétroaction a été limitée.

2. Procédé selon la revendication 1, **caractérisé en ce que** le paramètre d'indication de forte dynamique spectrale est le second coefficient de réflexion ($k_2$) issu d'une analyse de prédiction linéaire du signal d'entrée ($s(n)$).

3. Procédé selon la revendication 1, **caractérisé en ce que** le paramètre d'indication de forte dynamique spectrale est le second coefficient de réflexion ($k_2$) issu d'une analyse de prédiction linéaire du signal décodé ($\tilde{s}(n)$).

4. Procédé selon la revendication 1, **caractérisé en ce que** le paramètre de forte dynamique spectrale est un rapport signal à bruit entre le signal d'entrée et le bruit.

5. Procédé selon la revendication 1, **caractérisé en ce que** la limitation de la rétroaction s'effectue par la mise à zéro d'un coefficient de pondération à appliquer aux paramètres de filtrage du bruit (604).

6. Procédé selon la revendication 1, **caractérisé en ce que** la limitation de la rétroaction s'effectue par application d'un gain de valeur nulle en sortie du filtrage de bruit.

7. Procédé selon la revendication 5, **caractérisé en ce que** la réactivation progressive de la rétroaction s'effectue par l'application d'un coefficient de pondération aux paramètres de filtrage, le coefficient de pondération étant défini par incrémentation sur le nombre prédéterminé de trames.

8. Procédé selon la revendication 6, **caractérisé en ce que** la réactivation progressive de la rétroaction s'effectue par l'application d'une valeur de gain croissante en sortie du filtrage de bruit sur le nombre prédéterminé de trame.

9. Procédé selon la revendication 1, **caractérisé en ce qu'**il est mis en oeuvre à la fois lors du codage coeur et lors du codage d'amélioration d'un codage hiérarchique.

10. Codeur de type MICDA de signal audionumérique comportant une rétroaction de mise en forme d'un bruit de codage contenant un module de filtrage du bruit, **caractérisé en ce qu'**il comporte un module (600, 900) de contrôle de mise en forme de bruit incluant:

    - des moyens d'obtention d'un paramètre d'indication de forte dynamique spectrale du signal, indiquant un risque d'instabilité de la rétroaction;
    - des moyens de détection d'un risque d'instabilité par comparaison du paramètre d'indication à au moins un seuil prédéterminé;
    - des moyens de limitation de la rétroaction en cas de détection de risque d'instabilité;
    - des moyens de réactivation progressive de la rétroaction sur un nombre prédéterminé de trames postérieures à la trame courante pour laquelle la rétroaction a été limitée.

11. Programme informatique comportant des instructions de code pour la mise en oeuvre des étapes du procédé de contrôle selon l'une des revendications 1 à 9, lorsque ces instructions sont exécutées par un processeur.

**Patentansprüche**

1. Verfahren zur Steuerung einer Codierrauschformung beim Codieren vom Typ MICDA eines digitalen Audiosignals, wobei die Rauschformung durch einen Einsatz eines Feedbacks, umfassend eine Rauschfilterung, erfolgt, **dadurch gekennzeichnet, dass** es die folgenden Schritte umfasst:

    - Erhalt (702) eines Parameters zur Anzeige einer starken Spektraldynamik des Signals, der eine Gefahr einer Instabilität des Feedbacks anzeigt;
    - Erfassen (705) einer Instabilitätsgefahr durch Vergleichen des Anzeigeparameters mit mindestens einer vorbestimmten Schwelle;
    - Begrenzung (706) des Feedbacks im Falle einer Erfassung einer Instabilitätsgefahr;
    - progressive Reaktivierung (708, 709, 710) des Feedbacks auf einer vorbestimmten Anzahl von Rastern nach dem laufenden Raster, für den das Feedback begrenzt wurde.

2. Verfahren nach Anspruch 1, **dadurch gekennzeichnet, dass** der Parameter zur Anzeige einer starken Spektraldynamik der zweite Reflexionskoeffizient ($k_2$) ist, der von einer linearen Prädiktionsanalyse des Eingangssignals ($s(n)$) stammt.

3. Verfahren nach Anspruch 1, **dadurch gekennzeichnet, dass** der Parameter zur Anzeige einer starken Spektraldynamik der zweite Reflexionskoeffizient ($k_2$) ist, der von einer linearen Prädiktionsanalyse des decodierten Signals ($\tilde{s}(n)$) stammt.

4. Verfahren nach Anspruch 1, **dadurch gekennzeichnet, dass** der Parameter einer starken Spektraldynamik ein Signal-Rausch-Verhältnis zwischen dem Eingangssignal und dem Rauschen ist.

5. Verfahren nach Anspruch 1, **dadurch gekennzeichnet, dass** die Begrenzung des Feedbacks durch Rücksetzen eines Gewichtungskoeffizienten, der an die Rauschfilterparameter (604) anzulegen ist, auf Null erfolgt.

6. Verfahren nach Anspruch 1, **dadurch gekennzeichnet, dass** die Begrenzung des Feedbacks durch Anlegen eines Nullwertzuwachses am Ausgang der Rauschfilterung erfolgt.

7. Verfahren nach Anspruch 5, **dadurch gekennzeichnet, dass** die progressive Reaktivierung des Feedbacks durch Anlegen eines Gewichtungskoeffizienten an die Filterparameter erfolgt, wobei der Gewichtungskoeffizient durch Inkrementieren auf der vorbestimmten Anzahl von Rastern erfolgt.

8. Verfahren nach Anspruch 6, **dadurch gekennzeichnet, dass** die progressive Reaktivierung des Feedbacks durch Anlegen eines steigenden Zuwachswertes am Ausgang der Rauschfilterung auf der vorbestimmten Rasteranzahl erfolgt.

9. Verfahren nach Anspruch 1, **dadurch gekennzeichnet, dass** es sowohl bei der Kerncodierung als auch bei der Verbesserungscodierung einer hierarchischen Codierung eingesetzt wird.

10. Codierer vom Typ MICDA eines digitalen Audiosignals, umfassend ein Codierrauschformungsfeedback, das ein Rauschfiltermodul enthält, **dadurch gekennzeichnet, dass** es ein Rauschformungssteuerungsmodul (600, 900) besitzt, umfassend:

   - Mittel zum Erhalt eines Parameters zur Anzeige einer starken Spektraldynamik des Signals, der eine Gefahr einer Instabilität des Feedbacks anzeigt;
   - Mittel zum Erfassen einer Instabilitätsgefahr durch Vergleichen des Anzeigeparameters mit mindestens einer vorbestimmten Schwelle;
   - Mittel zur Begrenzung des Feedbacks im Falle einer Erfassung einer Instabilitätsgefahr;
   - Mittel zur progressiven Reaktivierung des Feedbacks auf einer vorbestimmten Anzahl von Rastern nach dem laufenden Raster, für den das Feedback begrenzt wurde.

11. Computerprogramm, umfassend Codebefehle für den Einsatz der Schritte des Steuerungsverfahrens nach einem der Ansprüche 1 bis 9, wenn diese Befehle von einem Prozessor ausgeführt werden.

**Claims**

1. Method of control of shaping of a coding noise during the coding of ADPCM type of a digital audio input signal, the noise shaping being performed by the implementation of a feedback comprising a filtering of the noise, **characterized in that** it comprises the following steps:

   - obtaining (702) of a parameter of indication of strong spectral dynamics of the signal, indicating a risk of instability of the feedback;
   - detection (705) of a risk of instability by comparing the indication parameter with at least one predetermined threshold;
   - limitation (706) of the feedback in case of detection of risk of instability;
   - progressive reactivation (708, 709, 710) of the feedback on a predetermined number of frames posterior to the current frame for which the feedback has been limited.

2. Method according to Claim 1, **characterized in that** the parameter of indication of strong spectral dynamics is the second reflection coefficient ($k_2$) arising from a linear prediction analysis of the input signal ($s(n)$).

3. Method according to Claim 1, **characterized in that** the parameter of indication of strong spectral dynamics is the second reflection coefficient ($k_2$) arising from a linear prediction analysis of the decoded signal ($\tilde{s}$(n)).

4. Method according to Claim 1, **characterized in that** the parameter of strong spectral dynamics is a signal-to-noise ratio between the input signal and the noise.

5. Method according to Claim 1, **characterized in that** the limitation of the feedback is performed by setting to zero a weighting coefficient to be applied to the noise filtering parameters (604).

6. Method according to Claim 1, **characterized in that** the limitation of the feedback is performed by applying a gain of zero value at the output of the noise filtering.

7. Method according to Claim 5, **characterized in that** the progressive reactivation of the feedback is performed by applying a weighting coefficient to the filtering parameters, the weighting coefficient being defined by incrementation on the predetermined number of frames.

8. Method according to Claim 6, **characterized in that** the progressive reactivation of the feedback is performed by applying an increasing value of gain at the output of the noise filtering on the predetermined number of frame.

9. Method according to Claim 1, **characterized in that** it is implemented both during the core coding and during the improvement coding of a hierarchical coding.

10. Coder of ADPCM type of digital audio signal comprising a shaping feedback for a coding noise containing a noise filtering module, **characterized in that** it comprises a noise shaping control module (600, 900) including:

- means for obtaining a parameter of indication of strong spectral dynamics of the signal, indicating a risk of instability of the feedback;
- means for detecting a risk of instability by comparing the indication parameter with at least one predetermined threshold;
- means for limiting the feedback in case of detection of risk of instability;
- means of progressive reactivation of the feedback on a predetermined number of frames posterior to the current frame for which the feedback has been limited.

11. Computer program comprising code instructions for the implementation of the steps of the method of control according to one of Claims 1 to 9, when these instructions are executed by a processor.

**Fig.1**

EP 2 586 133 B1

**Fig.2**

EP 2 586 133 B1

**Fig. 3**

**Fig. 4**

EP 2 586 133 B1

**Fig. 5**

**Fig. 6**

EP 2 586 133 B1

EP 2 586 133 B1

```
                          ┌─────────┐
                          │  DEBUT  │
                          └─────────┘
                               │
                               ▼
701  ──  ┌──────────────────────────────────────┐
         │  Calc. η, r'(k), k = 0, ..., M        │
         └──────────────────────────────────────┘
                               │
                               ▼
702  ──  ┌──────────────────────────────────────┐
         │           a_i, i = 0, ..., M          │
         │  Calc.                                │
         │           k_i, i = 1, ..., M          │
         └──────────────────────────────────────┘
                               │
                               ▼
         oui        ◇ η ≥ MAXNORM ? ◇   703
                               │ non
```

$a_i' = \dfrac{a_i}{2^{i+\eta-MAXNORM}}$

$i = 1, ..., M$

704

$\gamma_{mem} = GAMMA_1$

712

$\gamma = \gamma_{mem}$

711

$k_2 > 0.95?$   705

oui

$\gamma = 0$

706

non

$a_i' = a_i \gamma^i, i = 1, ..., M$

707

$\gamma_{mem} = \gamma + \dfrac{GAMMA_1}{4}$

708

$\gamma_{mem} > GAMMA_1?$   709

oui

$\gamma_{mem} = GAMMA_1$

710

non

```
                          ┌─────────┐
                          │   FIN   │
                          └─────────┘
```

**Fig. 7**

DEBUT

701 — $\boxed{\text{Calc. } \eta, r'(k), k = 0, \ldots, M}$

802
$$a_i, i = 0, \ldots, M$$
$$k_i, i = 1, \ldots, M$$
$$E_D$$

703 — $\eta \geq MAXNORM$ ?
oui / non

704
$$a_i' = \frac{a_i}{2^{i+\eta-MAXNORM}}$$
$$i = 1, \ldots, M$$

712 — $\gamma_{mem} = GAMMA_1$

805 — $\dfrac{E_D}{G_{MICDA}} > k_{RSB} RSB_Q$ ?
oui / non

706 — $\gamma = 0$

707 — $a_i' = a_i \gamma^i, i = 1, \ldots, M$

708 — $\gamma_{mem} = \gamma + \dfrac{GAMMA_1}{4}$

709 — $\gamma_{mem} > GAMMA_1$ ?
oui / non

710 — $\gamma_{mem} = GAMMA_1$

711 — $\gamma = \gamma_{mem}$

FIN

Fig. 8

**Fig. 9**

Fig.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- 7 kHz audio coding within 64 kbit/s. *IEEE Journal on Selected Areas in Communication,* 02 Février 1988, vol. 6
- **Y. HIWASAKI ; S. SASAKI ; H. OHMURO ; T. MORI ; J. SEONG ; M. S. LEE ; B. KÖVESI ; S. RAGOT ; J.-L. GARCIA ; C. MARRO.** *EUSIPCO,* 2008

- **J.D. MARKEL ; A. H. GRAY.** Linear Prediction of Speech. Springer-verlag, 1976
- **PAEZ ; GLISSON.** Minimum Mean-Squared-Error Quantization in Speech PCM and DPCM Systems. *IEEE Trans. Communications d'avril 1972 PP.,* 225-230